# EUROPÄISCHE PATENTSCHRIFT

(11) **EP 3 772 303 B1**
(45) Veröffentlichungstag und Bekanntmachung des Hinweises auf die Patenterteilung: **26.01.2022**
(21) Anmeldenummer: 20161340.3
(22) Anmeldetag: 05.03.2020
(51) Int. Cl.: A47J 43/07, A47J 36/06

(54) **DECKEL FÜR EIN RÜHRGEFÄSS EINER KÜCHENMASCHINE**
LID FOR A MIXING VESSEL OF A KITCHEN APPLIANCE
COUVERCLE POUR UN RECIPIENT DE MIXAGE D'UNE MACHINE DE CUISINE

(30) Priorität: 08.08.2019 DE 202019104360 U
(43) Veröffentlichungstag der Anmeldung: 10.02.2021
(73) Patentinhaber: Harbour Star International Ltd., Mongkok, Kowloon (HK)
(72) Erfinder: SCHROEDER, Thorsten, Mount Davis Village (HK)
(74) Vertreter: Raffay & Fleck

(56) Entgegenhaltungen:
- EP-A1- 2 526 842
- CN-U- 201 861 482
- DE-A1-102017 118 947

## Beschreibung

Die vorliegende Erfindung betrifft einen eine Oberseite und eine Unterseite aufweisenden Deckel zum Verschließen einer Aufnahmeöffnung eines Rührgefäßes einer Küchenmaschine. Sie betrifft ferner ein Rührgefäß einer Küchenmaschine mit einem solchen Deckel und auch eine Küchenmaschine mit Rührgefäß und Deckel. Schließlich besteht ein weiterer Aspekt der Erfindung auch in einem Einsatz zum Einsetzen in einer Öffnung eines Deckels für ein Rührgefäß einer Küchenmaschine.

Küchenmaschinen für eine automatisierte Zubereitung von Lebensmitteln, auch im Bereich von Verbraucherhaushalten, sind seit langem bekannt und gehören zum Stand der Technik. Derartige Küchenmaschinen verfügen über ein Maschinengehäuse, in dem ein Antriebsmotor zum rotierenden Antreiben eines Rühr- und Schneidwerks, nachfolgend vereinfacht Rührwerk genannt, angeordnet ist, und in dem eine Aufnahme für ein dort einzusetzendes Rührgefäß vorgesehen ist. Ein in die Aufnahme passendes Rührgefäß ist ebenfalls Bestandteil der Küchenmaschine, welches Rührgefäß lösbar in der Aufnahme angeordnet werden kann. Durch die Aufnahme ist bei derartigen Küchenmaschinen eine Antriebswelle geführt, mit der ein in dem Aufnahmegefäß angeordnetes Regelwerk zur Übertragung des Drehantriebs verbunden ist. Die Küchenmaschine verfügt weiterhin über eine Heizeinrichtung zum Erwärmen von in dem Rührgefäß angeordneten, zuzubereiten Lebensmittelgut. Schließlich ist ein Deckel vorgesehen, mit dem das Rührgefäß oberseitig verschlossen wird, wenn die Küchenmaschine betrieben wird. Ein Beispiel einer solchen Küchenmaschine ist in der DE 44 14 821 A1 offenbart und beschrieben.

Mit einer solchen Küchenmaschine können nun vorprogrammierte Bearbeitungsschritte bzw. Zubereitungsschritte für Lebensmittel durchgeführt werden, wobei insbesondere Drehzahl und gegebenenfalls Laufrichtung des Rührwerks veränderlich vorgegeben werden und die Temperatur des Lebensmittelguts, die durch Betrieb der Heizeinrichtung, die mit einer entsprechenden Heizleistung betrieben wird, erhalten wird.

Während des Betriebs dient der auf das Rührgefäß aufgesetzte Deckel einerseits dazu, ein Austreten von in dem Rührgefäß bearbeitetem Lebensmittelgut in die Umgebung der Küchenmaschine zu verhindern, andererseits bildet der Deckel einen Schutz gegen ein unbeabsichtigtes Eingreifen in das Rührgefäß, was zu erheblichen Verletzungen führen kann, einerseits durch das heiße Lebensmittelgut, andererseits durch das umlaufende Rührwerk, welches insbesondere geschärfte Klingenabschnitte aufweisen kann.

Bei auf dem Rührgefäß aufgesetztem Deckel lässt sich für den Bediener dadurch der Inhalt des Rührgefäßes nur schwer bis überhaupt nicht inspizieren. Das Innere des Gefäßes ist hierfür in der Regel zu dunkel, was insbesondere daran liegt, dass für die Küchenmaschinen zum Abdecken der Rührgefäße typischerweise Deckel aus einem intransparenten und häufig auch dunkel gefärbten Material, zum Beispiel einem solchen Kunststoffmaterial, verwendet werden. Aber auch die Verwendung eines an sich transparenten Deckels bringt hier keinen nennenswerten Vorteil, da im Betrieb der Küchenmaschine häufig zubereitetes Lebensmittelgut aufspritzt und an der Unterseite des Deckels haften bleibt, sodass auch dann ein sicherer Einblick in das Innere des Rührgefäßes nicht möglich ist.

Die Anwender derartige Küchenmaschinen wollen gleichwohl die Möglichkeit haben, in das Rührgefäß der Küchenmaschine zu schauen, auch bei laufendem Betrieb der Küchenmaschine. Einerseits wollen sie den Zustand des in dem Rührgefäß zubereiteten Lebensmittels optisch kontrollieren können. Andererseits ist es häufig auch erforderlich, während des laufenden Betriebes weitere Zutaten in das Rührgefäß der Küchenmaschine zu geben, was typischerweise durch eine in dem Deckel vorgesehene, häufig zentral angeordnete, Öffnung erfolgt. Auch während oder insbesondere nach der Zugabe weiterer Zutaten möchte der Nutzer der Küchenmaschine den Topfinhalt häufig durch Einsichtnahme kontrollieren.

Um diesem Problem zu begegnen ist bereits eine Lösung dahingehend vorgeschlagen worden, dass ein Rührgefäß einer solchen Küchenmaschine mit einer Innenraumbeleuchtung versehen wird. So beschreibt die DE 10 2017 118 947 A1 ein solches Rührgefäß, bei dem in einem Handgriff eine Lichtquelle angeordnet ist, die über einen bodenseitig an dem Rührgefäß angeordneten Kontakt aus dem Maschinengehäuse heraus mit Energie versorgt wird und deren Lichtausgabe über einen Lichtleiter durch das Griffelement weitergeführt wird bis zu einem am oberen Rand des Rührgefäßes angeordneten Austrittsfenster, durch welches hindurch das durch den Lichtleiter geführte Licht in den Innenraum des Rührgefäßes gelenkt wird.

Wenngleich mit der in der DE 10 2017 118 947 A1 vorgeschlagenen Lösung, durch die dort gegebene Innenbeleuchtung des Rührgefäßes, eine Möglichkeit geschaffen wird, dass ein Betrachter zum Beispiel durch eine zentrale Öffnung in dem Gefäßdeckel hindurch oder durch ein dort angeordnetes Sichtfenster in das Innere des Rührgefäßes auch bei laufendem Betrieb der Küchenmaschine einsehen kann, ist der dort vorgeschlagene Aufbau mit der in dem Handgriff des Rührgefäßes angeordneten Lichtquelle, der gesonderten elektrischen Zuleitung, für die eigene Kontakte am Maschinengehäuse vorzusehen sind und mit dem Lichtleiter, der ebenfalls im Handgriff anzuordnen ist, komplex, aufwendig und am Ende kostenintensiv. Rührgefäße für Küchenmaschinen auf diese Weise mit einer Innenraumbeleuchtung zu versehen, ist entsprechend kostspielig und führt zu höheren Kosten bei der Herstellung entsprechender Rührgefäße. Auch ist ein Nachrüsten bestehender Küchenmaschinen mit einer derartigen Beleuchtungsfunktion nicht möglich, insbesondere da auch am Maschinengehäuse die gesonderten Kontakte für die Zuführung der elektrischen Versorgungsenergie für die Lichtquelle bereitzustellen sind.

Entsprechend ist es Aufgabe der vorliegenden Erfindung, eine einfachere und gleichwohl effiziente Möglichkeit zu schaffen, eine Beleuchtung des Inneren eines Rührgefäßes einer Küchenmaschine bei auf dem Rührgefäß aufgesetztem Deckel zu ermöglichen. Bevorzugt soll eine erfindungsgemäß vorzusehende Beleuchtungsfunktion auch für bestehende Küchenmaschinen einfach nachrüstbar gestaltet sein.

Diese Aufgabe wird erfindungsgemäß gelöst zunächst durch einen eine Oberseite und eine Unterseite aufweisenden Deckel zum Verschließen einer Aufnahmeöffnung eines Rührgefäßes einer Küchenmaschine mit den Merkmalen des Patentanspruchs 1. Vorteilhafte Weiterbildungen eines solchen Deckels sind in den abhängigen Patentansprüchen 3 bis 12 angegeben. Mit einem weiteren Aspekt gibt die Erfindung dann ein Rührgefäß für eine Küchenmaschine mit einer oberen Einfüllöffnung an, welches einen Deckel gemäß der Erfindung aufweist. Auch eine Küchenmaschine mit einem derartigen Rührgefäß ist Bestandteil der Erfindung. Schließlich ist ein weiterer Aspekt der Erfindung in einem Einsatz zum Einsetzen in einer Öffnung eines Deckels für ein Rührgefäß einer Küchenmaschine zu sehen, der die Merkmale des Patentanspruchs 2 aufweist. Weiterbildungen eines solchen Einsatzes sind dann in den abhängigen Patentansprüchen 3 bis 12 bezeichnet.

Gemäß einem ersten Aspekt wird mit der Erfindung also zunächst ein Deckel zum Verschließen einer Aufnahmeöffnung eines Rührgefäßes einer Küchenmaschine angegeben. Dieser Deckel weist eine Oberseite und eine Unterseite auf. Die Unterseite ist, wenn der Deckel eine Aufnahmeöffnung eines Rührgefäßes einer Küchenmaschine verschließt, typischerweise dem Innenraum des Rührgefäßes zugewandt, die Oberseite des Deckels liegt entsprechend außen. Der Deckel weist eine quer zu einer Abdeckebene, in der der Deckel die Aufnahmeöffnung des Rührgefäßes im eingesetzten Zustand überspannt, durchbrechende Öffnung auf. Diese Öffnung kann zum Beispiel und insbesondere zentral an dem Deckel angeordnet sein. Sie kann aber auch azentrisch liegen. Derartige Öffnungen sind bei Deckeln bekannter Küchenmaschinen zum Verschließen der Rührgefäße dieser Maschinen regelmäßig anzutreffen und dienen insbesondere auch dem Einbringen von weiteren Zutaten in das Rührgefäß während des Betriebs der Küchenmaschine. In die Öffnung des erfindungsgemäßen Deckels ist ein Einsatz eingesetzt, der die Öffnung verschließt. Dabei sind im Bereich der Öffnung erste Verbindungstrukturen vorgesehen und weist der Einsatz zweite Verbindungstrukturen auf. Die ersten Verbindungstrukturen und die zweiten Verbindungstrukturen bilden eine lösbare Verbindung zwischen dem Einsatz und dem Deckel aus, sodass der Einsatz, wenn er an dem Deckel festliegt, dort gehalten ist, von dem Deckel und der Öffnung entsprechend aber gelöst werden kann, insbesondere um die Öffnung zum Beispiel für ein Einfüllen weiterer Zutaten in das Rührgefäß hinein freizugeben. Der Einsatz weist weiterhin eine umlaufende Seitenwand auf mit der er über die Oberseite des Deckels vorsteht. Weiterhin hat der Einsatz eine die Seitenwand stirnseitig abschließende Deckfläche. Die Seitenwand des Einsatzes ist wenigstens in einem Bereich transparent ausgebildet, kann insbesondere insgesamt transparent gebildet sein. Sie kann zum Beispiel aus einem transparenten Kunststoff bestehen.

Das Besondere an dem Einsatz und mithin an dem Deckel für ein Rührgefäß einer Küchenmaschine besteht nun darin, dass er eine Lichtquelle aufweist, die zum Abstrahlen von Licht in Richtung der Deckelöffnung und zu der Deckelunterseite hin eingerichtet ist.

Mit dieser erfindungsgemäßen Lösung wird also der Einsatz, der im Betrieb die Öffnung in dem das Rührgefäß oberseitig verschließenden Deckel der Küchenmaschine verschließt, zugleich als Lichtquelle genutzt, mit der in das Innere des Rührgefäßes geleuchtet werden kann, um den Inhalt des Rührgefäßes insbesondere auch während eines Bearbeitungsvorganges der Küchenmaschine für einen Betrachter auszuleuchten und so sichtbar zu machen. Der Betrachter kann dabei durch die transparente Seitenwand des Einsatzes hindurch in das Innere des Rührgefäßes Einblick nehmen und das dortige Geschehen, den Inhalt und auch den Vorgang der Bearbeitung betrachten.

Da in der erfindungsgemäßen Ausgestaltung der Einsatz, der in die Öffnung des Deckels eingesetzt wird, die Lichtquelle bildet, bzw. die Lichtquelle enthält, ist diese Lichtquelle einfach und kostengünstig zu realisieren. Es bedarf hierfür nicht etwa eines eigenständig konstruierten Rührgefäßes und einer Einrichtung des Maschinengehäuses, insbesondere der darin angeordneten Aufnahme für das Rührgefäß, in der Weise, dass dort eine Zufuhr von elektrischer Energie zum Betreiben der Lichtquelle zur Verfügung gestellt ist. Vielmehr kann einfach ein wie vorstehend beschriebener, mit einer Lichtquelle ausgestatteter Einsatz bereitgestellt werden, wobei die Lichtquelle in oder an dem Einsatz insbesondere zum Beispiel batteriebetrieben sein kann. Diese erfindungsgemäße Ausgestaltung erlaubt ferner ein Nachrüsten bestehender Deckel für Küchenmaschinen, also auch bestehender Küchenmaschinen an sich oder auch nur von deren Rührgefäßen, um diese ebenfalls mit der Möglichkeit einer Innenbeleuchtung des Rührgefäßes auch im Betrieb der Küchenmaschine auszustatten. Es genügt nämlich vollkommen, einen entsprechenden Einsatz für bestehende Küchenmaschinen bereitzustellen, der in eine in dem dortigen Deckeln regelmäßig vorhandene Öffnung eingesetzt und darin festgelegt werden kann, sodass er mit einem transparenten Abschnitt seiner umlaufenden Seitenwand auf der Oberseite des Deckels übersteht. Mit der in dem Einsatz integrierten Lichtquelle kann dann das Innere des Rührgefäßes ausgeleuchtet werden, und durch die transparente Seitenwand bzw. durch einen transparenten Bereich oder Abschnitt derselben kann ein Betrachter den ausgeleuchteten Innenraum des Rührgefäßes dann einsehen.

Mit Vorteil kann die Deckfläche des Einsatzes intransparent, also undurchsichtig, gebildet sein. Sie kann zum Beispiel aus einem dunkelgefärbten Kunststoff bestehen, aber auch aus einem anderen Material oder in anderer Einfärbung oder Ausgestaltung. Eine intransparente Ausgestaltung der Deckfläche ist insbesondere dann, aber nicht allein in diesem Fall, von Vorteil, wenn die Lichtquelle im Bereich der Deckfläche angeordnet ist, wie dies eine weitere vorteilhafte Weiterbildung der Erfindung vorsieht. Denn dann wird verhindert, dass Licht aus der Lichtquelle etwa rückwärtig aus der Deckfläche austritt. Vielmehr kann das Licht der an der Deckfläche angeordneten Lichtquelle durch geeignete Maßnahmen, z.B. Reflektoren, in Richtung der Unterseite des Deckels und durch die Öffnung hindurch geleitet werden. Der Betrachter wird hierbei auch nicht etwa durch das von der Lichtquelle emittierte Licht geblendet, da er seinen Blick seitlich durch den transparenten Bereich der Seitenwand in das Innere des Rührgefäßes hinein richtet, also nicht direkt in die Lichtquelle schaut.

Die Lichtquelle kann in der Deckfläche insbesondere versenkt angeordnet sein, um noch besser ein etwaiges Blenden des durch die Seitenwand schauenden Betrachters zu verhindern.

Die Lichtquelle kann aber auch in einem lösbar mit einem Grundkörper des Einsatzes verbundenen Anbauteil integriert, bzw. darin angeordnet sein. Somit ist es sogar auch denkbar, bestehende, z.B. insgesamt transparent gebildete Einsätze für Deckel von Rührgefäßen von Küchenmaschinen durch Bereitstellen eines eine Lichtquelle aufweisenden, mit dem bestehenden Einsatz verbindbaren Anbauteils im Sinne der Erfindung zu ertüchtigen.

Das Anbauteil kann an dem Einsatz z.B. mittels Magnetkräften, durch Verklemmen, durch Verschrauben, mittels eines formschlüssigen Verschlusses, wie eines Bajonettverschlusses oder dergleichen lösbar festgelegt und gehalten sein.

Als Lichtquelle kommen grundsätzlich alle geeigneten Mittel zur Erzeugung von Licht in Betracht. Mit besonderem Vorteil kann die Lichtquelle durch eine oder mehrere LEDs und/oder OLEDs gebildet sein. Derartige Lichtquellen bzw. Bauelemente sind günstig im Energieverbrauch und vergleichsweise robust, können dabei Licht von für den hiesigen Anwendungszweck jedenfalls ausreichend hoher Intensität erzeugen.

Mit Vorteil sollte das von der Lichtquelle erzeugte Licht weißes Licht sein. Mit weißem Licht, zum Beispiel von einer Weißlicht-LED, die in einer Lichttemperatur möglichst angelehnt an das Licht der Sonne gebildet ist, ist die Wahrnehmung des mit diesem Licht ausgeleuchteten Objekts, zum Beispiel einer während des Betriebs der Küchenmaschine verarbeiteten Speise, weitgehend so, wie der Betrachter diese im Tageslicht erfahren würde.

Mit Vorteil kann die Lichtquelle schaltbar ausgebildet sein, sodass ein Benutzer die Lichtquelle nur dann in Betrieb nimmt und einschaltet, wenn er tatsächlich das Innere des Rührgefäßes beleuchten will, um Einblick darein zu nehmen.

Für die Aufnahme weiterer Komponenten, die für den Betrieb der Lichtquelle, die in dem Einsatz ausgebildet ist, erforderlich sind, kann insbesondere abgewandt von der Oberseite des Deckels sich an die Deckfläche anschließend ein Aufnahmeteil ausgebildet sein. Dieses kann insbesondere eine Energieversorgung für die Lichtquelle aufnehmen, zum Beispiel eine oder mehrere Batterien oder Akkumulatoren. Auch etwaige Steuerkreise, die für den Betrieb der Lichtquelle erforderlich sind, können in dem Aufnahmeteil untergebracht sein. Mit Vorteil kann an dem Aufnahmeteil zum Beispiel ein Schalter zum Ein- und Ausschalten der Lichtquelle angeordnet sein. Dies kann zum Beispiel ein Druckschalter, ein Taster, ein Kippschalter oder dergleichen sein.

Bei dem erfindungsgemäßen Deckel kann schließlich der Einsatz becherförmig gebildet sein mit einer der Deckfläche gegenüberliegenden, stirnseitigen Öffnung. Im montierten Zustand liegt diese Öffnung dann dem Innern des Gefäßes, dass mit dem erfindungsgemäßen Deckel verschlossen ist, zugewandt und wird insbesondere von einem Rand der in dem Deckel ausgebildeten Öffnung umgeben, sodass nicht etwa Inhalt des Rührgefäßes durch eine freiliegende Öffnung austreten könnte. Eine solche becherförmige Ausgestaltung ermöglicht es, den Einsatz, wenn er von dem Deckel gelöst ist, als Gefäß zu nutzen, um darin zum Beispiel Flüssigkeiten oder anderer Zutaten, die in das Innere des Rührgefäßes gegeben werden sollen zu transportieren und aus dem becherförmigen Einsatz durch die Öffnung in dem Deckel in das Innere des Rührgefäßes zu geben. Einen weiteren Nutzen erhält der becherförmig gebildete Einsatz dann, wenn er als Messbecher ausgebildet ist, indem er eine oder mehrere, ein bestimmtes Füllvolumen oder ein umgerechnetes Gewicht einer bis dorthin eingeführten Zutat anzeigende Peilmarkierungen, wie zum Beispiel Eichstriche aufweist.

Wie vorstehend bereits ausgeführt, besteht ein weiterer Aspekt der Erfindung auch in einem Rührgefäß für eine Küchenmaschine mit einer oberen

Einfüllöffnung und mit einem wie vorstehend beschriebenen Deckel zum Verschließen der Einfüllöffnung.

Weiterhin verwirklicht die Erfindung auch eine Küchenmaschine zum Zubereiten von Lebensmitteln mit einem Gehäuse, einem in dem Gehäuse angeordneten Antrieb für ein Rührwerk, einem an dem Gehäuse festlegbaren, eine obere Einfüllöffnung aufweisenden Rührgefäß, einem in dem Rührgefäß anordbaren, mit dem Antrieb verbindbaren Rührwerk, einer Heizeinrichtung zum Erwärmen eines in dem Rührgefäß aufgenommenen, zuzubereiten Lebensmittels und einem wie vorstehend beschriebenen Deckel zum Verschließen der Einfüllöffnung des Rührgefäßes.

Schließlich ist die Erfindung auch verwirklicht durch einen Einsatz zum Einsetzen in einer Öffnung eines Deckels für ein Rührgefäß einer Küchenmaschine. Dieser erfindungsgemäße Einsatz verfügt über Verbindungstrukturen für eine lösbare Verbindung mit dem Deckel des Rührgefäßes. Er hat weiterhin eine umlaufende Seitenwand, die wenigstens in einem Bereich transparent ausgebildet ist. Weiterhin hat der erfindungsgemäße Einsatz eine die Seitenwand an einer ersten Stirnseite abschließende Deckfläche. Dieser Deckfläche liegt eine zweite Stirnseite des Einsatzes gegenüber, und der Einsatz weist eine Lichtquelle auf, die zum Abstrahlen von Licht in Richtung der zweiten Stirnseite eingerichtet ist. Dieser Einsatz kann und wird insbesondere ein Bestandteil eines wie vorstehend beschriebenen erfindungsgemäßen Deckels sein. Dabei können die vorstehend in Bezug auf den Deckel näher beschriebenen Ausgestaltungen des Einsatzes des Deckels selbstverständlich auch isoliert für den erfindungsgemäßen Einsatz umgesetzt werden, sodass hinsichtlich möglicher Weiterbildungen des Einsatzes auf die vorstehenden Ausführungen und die diesbezüglich genannten Vorteile verwiesen werden kann.

Weitere Vorteile und Merkmale der Erfindung ergeben sich aus der nachstehenden Beschreibung eines Ausführungsbeispiels anhand der beigefügten Figuren.

### Dabei zeigen:

- Figur 1: in zwei Ansichten a und b einen erfindungsgemäßen Einsatz mit einer Lichtquelle;
- Figur 2: ein erfindungsgemäßes Rührgefäß mit einem erfindungsgemäßen Deckel und einem - oberhalb des Deckels angeordneten - erfindungsgemäßen Einsatz in einer perspektivischen Darstellung;
- Figur 3: ein erfindungsgemäßes Rührgefäß mit einem erfindungsgemäßen Deckel und einem an dem Deckel lösbar festgelegten erfindungsgemäßen Einsatz in einer perspektivischen Darstellung; und
- Figur 4: eine schematische Längsschnittdarstellung durch ein erfindungsgemäßes Rührgefäß mit einem erfindungsgemäßen Deckel und einem an dem Deckel lösbar festgelegten erfindungsgemäßen Einsatz zur Veranschaulichung der Ausleuchtungsfunktion der Lichtquelle.

In den Figuren sind mögliche Ausgestaltungsformen der Erfindung gezeigt, die nachfolgend anhand dieser Figuren näher beschrieben werden.

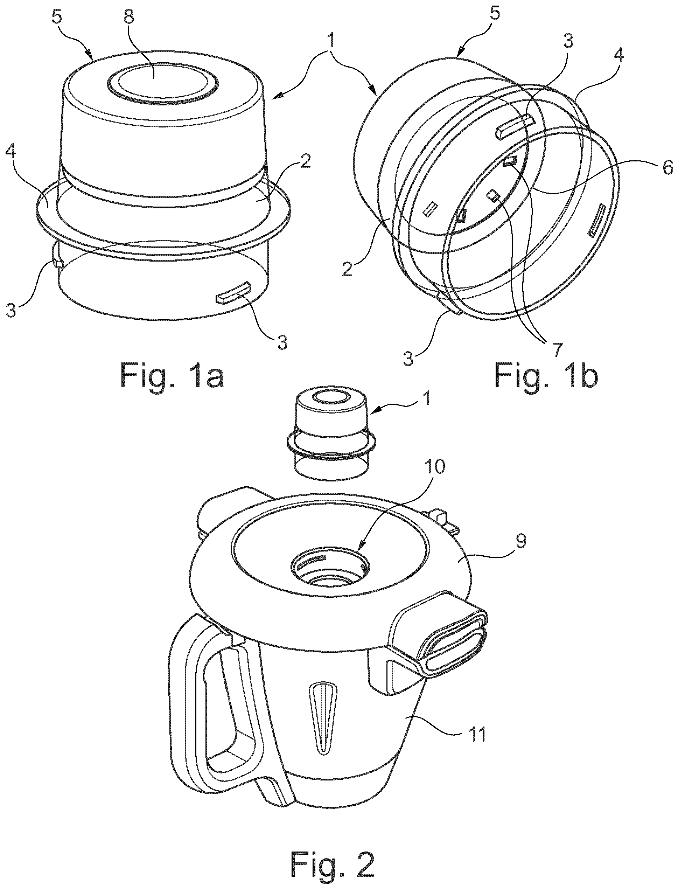

In der Figur 1 ist zunächst in zwei Darstellungen, einer ersten perspektivischen Darstellung (Figur 1a) und einer zweiten perspektivischen Darstellung (Figur 1b) ein Einsatz 1 zum Einsetzen in eine Öffnung eines Deckels für ein Rührgefäß einer Küchenmaschine in einer erfindungsgemäßen Ausgestaltung gezeigt. Dieser Einsatz 1 ist allgemein becherförmige gebildet mit einer umlaufenden Seitenwand 2, die aus einem transparenten Material, zum Beispiel einem durchsichtigen Kunststoff, besteht. Im Bereich einer eine Öffnung zu dem Becherinnern des Einsatzes 1 aufzeigenden Stirnseite sind an der umlaufenden Seitenwand 2 Leisten 3 ausgebildet, die als Verbindungstrukturen zum Verbinden mit entsprechenden Gegenstrukturen an einem Deckel eines Rührgefäßes einer Küchenmaschine dienen. Die Verbindung erfolgt dabei in dem gezeigten Ausführungsbeispiel nach Art eines Bajonettverschlusses. Weiterhin ist an der umlaufenden Seitenwand 2 ein umlaufender Kragen 4 ausgebildet, der als Anschlag für den Einsatz 1 dient, wenn dieser in einer Öffnung in einem Deckel für ein Rührgefäß einer Küchenmaschine eingesetzt wird. Dieser umlaufende Kragen 4 kann aber auch als ein Eichstrich verwendet werden, der ein vorgegebenes Füllvolumen des becherförmige Einsatzes 1 anzeigt, wenn in dessen innenliegende Aufnahme eine Flüssigkeit oder ein anderes Gut (zum Beispiel Reis oder dergleichen) eingefüllt wird. So kann zum Beispiel das Füllvolumen bis zu dem umlaufenden Kragen 4 bei mit der Öffnung nach oben gerichtetem Einsatz 1 30 ml oder ein anderes vorgegebenes Volumen betragen.

Auf einer der Öffnung gegenüberliegenden Stirnseite ist auf dem Einsatz 1 ein Aufsatz 5 angeordnet und festgelegt. Dieser bildet entweder eine Deckfläche 6 des Einsatzes 1 an der Stirnseite, auf der der Aufsatz 5 aufliegt, aus oder grenzt an eine solche Deckfläche 6 an. Auf der die Deckfläche 6 ausbildenden Fläche oder einer dieser Deckfläche 6 zugewandten Fläche des Aufsatzes 5 sind LEDs 7, insbesondere Weißlicht-LEDs, angeordnet. Diese können auch in der Deckfläche 6 versenkt oder eingelassen angeordnet sein. Diese LEDs 7 bilden eine Lichtquelle, mit der Licht in Richtung der offenen Stirnfläche des becherartig geformten Einsatzes 1 abgestrahlt werden kann, wenn die LEDs 7 in Betrieb genommen sind. Eine Ansteuerung für die LEDs 7 ebenso wie eine Energiequelle zum Betreiben der LEDs 7 sind in dem Aufsatz 5 angeordnet. Auf einer äußeren Stirnfläche, die abgewandt von der Öffnung des becherförmigen Einsatzes 1 gelegen ist, ist an dem Aufsatz 5 ein Druckschalter 8 ausgebildet, zum Ein- und Ausschalten der LEDs 7.

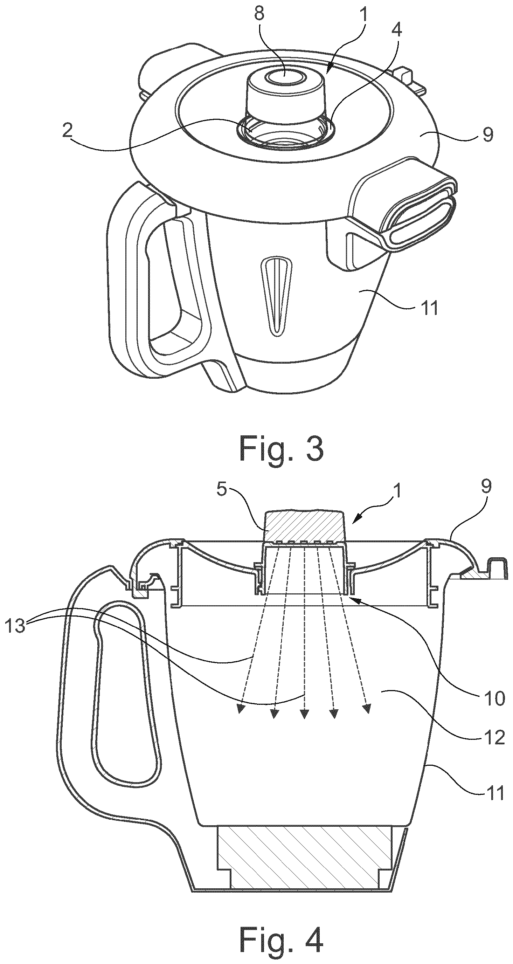

Der in den Figuren 1a und 1b gezeigte Einsatz 1 wird nun zum Bilden eines erfindungsgemäßen Deckels für ein Rührgefäß einer Küchenmaschine in eine in einem solchen Deckel gebildete Öffnung eingesetzt und mit dem Deckel verbunden. Dies ist in den Figuren 2 und 3 zu erkennen. Dort ist ein Deckel 9 zu erkennen, der eine zentrale Öffnung 10 aufweist. In der Figur 2 ist der Einsatz 1 losgelöst und oberhalb der Öffnung 10 gezeigt. In Figur 3 ist der Einsatz 1 in die Öffnung 10 eingesetzt und dort festgelegt, entsprechend also mit dem Deckel 9 verbunden, dargestellt. Zu erkennen ist hier auch, dass der umlaufende Kragen 4 auf der Oberseite des Deckels 9 aufliegt und so einen Anschlag bildet. Der Deckel 9 mit dem in die Öffnung 10 eingesetzten Einsatz 1 ist wiederum auf ein Rührgefäß 11 aufgesetzt und verschließt dieses an einer oberseitigen Öffnung desselben. In der Öffnung 10 sind, hier nicht näher zu erkennen, Gegenstrukturen ausgebildet, die mit den Leisten 3, die an der umlaufenden Seitenwand 2 des Einsatzes 1 angeformt sind, zusammenwirken, um den Einsatz 1 in der Öffnung 10 nach Art eines Bajonettverschlusses zu verriegeln und zu sichern.

In einer wie in Figur 3 gezeigten Position kann nun durch Betätigen des Druckschalters 8 die Lichtquelle in Form der LEDs 7 in Betrieb genommen werden, können die LEDs zum Abstrahlen von Licht eingeschaltet werden. Hierdurch wird der Innenraum des Rührgefäßes 11 beleuchtet, der Betrachter kann durch die transparente, umlaufende Seitenwand 2, die oberhalb des Kragens 4 über den Deckel 9 vorsteht, Einblick in das Gefäßinnere, also den Innenraum des Rührgefäßes 11 nehmen und erkennen, in welchem Zustand sich die in dem Rührgefäß 11 aufgenommenen Lebensmittel befinden.

Veranschaulicht ist dies auch noch einmal in der schematischen Schnittansicht der Figur 4, die einen Längsschnitt durch ein erfindungsgemäßes Rührgefäß 11 zeigt, das mit einem erfindungsgemäßen Deckel 9, in dem ein erfindungsgemäßer Einsatz 1 eingesetzt ist, verschlossen ist. In dieser Darstellung ist durch gestrichelte Linien und Pfeile angedeutet von den LEDs ausgehendes Licht 13 veranschaulicht, welches den Innenraum 12 Rührgefäßes 11 ausgeleuchtet. Nicht näher dargestellt ist hier ein im Betrieb des Rührgefäßes, d.h. bei mit einer Küchenmaschine verbundenem Rührgefäß im Bodenbereich des Rührgefäßes angeordnetes Rührwerk, welches in dem Rührgefäß zuzubereitende Lebensmittel rührt und/oder zerkleinert. Auch nicht weiter dargestellt ist hier eine in dem Rührgefäß 11 und/oder in einer Aufnahme für das Rührgefäß an einem Maschinengehäuse einer Küchenmaschine vorhandene Heizeinrichtung zum Erwärmen beziehungsweise Erhitzen von in dem Innenraum 12 des Rührgefäßes 11 aufgenommenen Lebensmittelgut.

Aus der vorstehenden Beschreibung der Ausführungsformen ist noch einmal deutlich geworden, dass die Erfindung einen erheblichen Nutzen, nämlich die Möglichkeit der Ausleuchtung des Innenraums 12 eines Rührgefäßes 11 bereitstellt mit einem einfachen und insbesondere auch für bestehende Deckel von Rührgefäßen nachrüstbaren Lösung.

### Bezugszeichenliste

- 1: Einsatz
- 2: Seitenwand
- 3: Leiste
- 4: Kragen
- 5: Aufsatz
- 6: Deckfläche
- 7: LED
- 8: Druckschalter
- 9: Deckel
- 10: Öffnung
- 11: Rührgefäß
- 12: Innenraum
- 13: Licht

## Patentansprüche

1. Eine Ober- und eine Unterseite aufweisender Deckel (9) zum Verschließen einer Aufnahmeöffnung eines Rührgefäßes (11) einer Küchenmaschine mit einer den Deckel (9)
quer zu einer Abdeckebene durchbrechenden Öffnung (10) und einem in einem in der Öffnung (10) eingesetzten, mit dem Deckel (9) lösbar verbundenen, die Öffnung (10) verschließenden Einsatz (1), wobei im Bereich der Öffnung (10) erste Verbindungsstrukturen vorgesehen sind, die mit an dem Einsatz (1) ausgebildeten zweiten Verbindungsstrukturen (3) eine lösbare Verbindung zwischen dem Einsatz (1) und dem Deckel (9) ausbilden, wobei der Einsatz (1) eine umlaufende Seitenwand (2) aufweist, mit der er über die Oberseite des Deckels (9) vorsteht, und wobei der
Einsatz (1) ferner eine die Seitenwand (2) stirnseitig abschließende Deckfläche (6) aufweist, wobei die Seitenwand (2) wenigstens in einem Bereich transparent ausgebildet ist, **dadurch gekennzeichnet, dass** der Einsatz (1) eine Lichtquelle (7) aufweist, die zum Abstrahlen von Licht (13) in Richtung der Öffnung (10) und zu der Deckelunterseite hin eingerichtet ist.

2. Einsatz (1) zum Einsetzen in eine Öffnung (10) eines Deckels (9) für ein Rührgefäß (11) einer Küchenmaschine mit
• Verbindungsstrukturen (3) für eine lösbare Verbindung mit dem Deckel (9) des Rührgefäßes (11),
• einer wenigstens in einem Bereich transparent ausgebildeten, umlaufenden Seitenwand (2),
• einer die Seitenwand (2) an einer ersten Stirnseite abschließenden Deckfläche (6),
• einer der Deckfläche (6) gegenüberliegenden zweiten Stirnseite und
• einer Lichtquelle (7), die zum Abstrahlen von Licht in Richtung der zweiten Stirnseite eingerichtet ist.

3. Deckel (9) nach Anspruch 1 oder Einsatz (1) nach Anspruch 2, **dadurch gekennzeichnet, dass** die Deckfläche (6) intransparent ausgebildet und/oder außenseitig mit einem intransparenten Material abgedeckt ist.

4. Deckel (9) nach einem der Ansprüche 1 oder 3 oder Einsatz (1) nach einem der Ansprüche 2 oder 3, **dadurch gekennzeichnet, dass** die Lichtquelle (7) im Bereich der Deckfläche (6) angeordnet ist.

5. Deckel (9) nach einem der Ansprüche 1, 3 oder 4 oder Einsatz (1) nach einem der Ansprüche 2 bis 4, **dadurch gekennzeichnet, dass** die Lichtquelle (7) in der Deckfläche (6) versenkt angeordnet ist.

6. Deckel (9) nach einem der Ansprüche 1, oder 3 bis 5 oder Einsatz (1) nach einem der Ansprüche 2 bis 5, **dadurch gekennzeichnet, dass** die Lichtquelle (7) durch eine oder mehrere LEDs und/oder OLEDs gebildet ist.

7. Deckel (9) nach einem der Ansprüche 1 oder 3 bis 6 oder Einsatz (1) nach einem der Ansprüche 2 bis 6, **dadurch gekennzeichnet, dass** die Lichtquelle (7) eine Quelle für weißes Licht ist.

8. Deckel (9) nach einem der Ansprüche 1 oder 3 bis 7 oder Einsatz (1) nach einem der Ansprüche 2 bis 7, **dadurch gekennzeichnet, dass** die Lichtquelle (7) schaltbar ausgebildet ist.

9. Deckel (9) nach einem der Ansprüche 1 oder 3 bis 8 oder Einsatz (1) nach einem der Ansprüche 2 bis 8, **dadurch gekennzeichnet, dass** sich, abgewandt von der Oberseite des Deckels (9), an die Deckfläche (6) ein Aufnahmeteil (5) anschließt, in dem eine Energieversorgung für die Lichtquelle (7) angeordnet ist.

10. Deckel (9) oder Einsatz (1) nach Anspruch 9, **dadurch gekennzeichnet, dass** an dem Aufnahmeteil (5) ein Schalter (8) zum Ein- und Ausschalten der Lichtquelle (7) angeordnet ist.

11. Deckel (9) nach einem der Ansprüche 1 oder 3 bis 10 oder Einsatz (1) nach einem der Ansprüche 2 bis 10, **dadurch gekennzeichnet, dass** der Einsatz (1) becherförmig gebildet ist mit einer der Deckfläche (6) gegenüberliegenden stirnseitigen Öffnung.

12. Deckel (9) oder Einsatz (1) nach Anspruch 10, **dadurch gekennzeichnet, dass** der Einsatz (1) als Messbecher ausgebildet ist.

13. Rührgefäß (11) für eine Küchenmaschine mit einer oberen Einfüllöffnung und mit einem Deckel (9) nach einem der Ansprüche 1 oder 3 bis 9 zum Verschließen der Einfüllöffnung.

14. Küchenmaschine zum Zubereiten von Lebensmitteln mit einem Gehäuse, einem in dem Gehäuse angeordneten Antrieb für ein Rührwerk, einem an dem Gehäuse festlegbaren, eine obere Einfüllöffnung aufweisenden Rührgefäß (11), einem in dem Rührgefäß (11) anordbaren, mit dem Antrieb verbindbaren Rührwerk, einer Heizeinrichtung zum Erwärmen eines in dem Rührgefäß (11) aufgenommenen, zuzubereitenden Lebensmittels und einem gemäß einem der Ansprüche 1 oder 3 bis 9 gebildeten Deckel (9) zum Verschließen der Einfüllöffnung des Rührgefäßes (11).

## Claims

1. A lid (9) having an upper side and a lower side for closing a receiving opening of a mixing vessel (11) of a kitchen machine, having an opening (10) which breaks through the lid (9) transversely with respect to a covering plane, and having an insert (1) which is inserted in the opening (10) and is detachably connected to the lid (9), the insert (1) being provided in the region of the opening (10) with first connecting structures which form a detachable connection with second connecting structures (3) formed on the insert (1), **characterised in that** closing the opening (10), first connecting structures being provided in the region of the opening (10) and forming a releasable connection between the insert (1) and the lid (9) with second connecting structures (3) formed on the insert (1), wherein the insert (1) has a circumferential side wall (2) with which it projects over the upper side of the lid (9), and wherein the insert (1) also has a covering surface (6) which closes off the side wall (2) on the end face, wherein the side wall (2) is transparent at least in one region, **characterised in that** the insert (1) has a light source (7) which is set up to emit light (13) in the direction of the opening (10) and towards the underside of the lid.

2. An insert (1) for insertion into an opening (10) of a lid (9) for a mixing vessel (11) of a food processor with
• connecting structures (3) for releasable connection to the lid (9) of the stirring vessel (11),
• a surrounding side wall (2) which is transparent in at least one region,
• a covering surface (6) closing the side wall (2) at a first end face,
• a second end face opposite the covering surface (6) and a light source (7) arranged to emit light in the direction of the second end face.

3. A lid (9) according to claim 1 or an insert (1) according to claim 2, **characterised in that** the covering surface (6) is designed to be opaque and/or is covered on the outside with an opaque material.

4. A lid (9) according to one of claims 1 or 3 or an insert (1) according to one of claims 2 or 3, **characterised in that** the light source (7) is arranged in the region of the covering surface (6).

5. A lid (9) according to one of claims 1, 3 or 4 or an insert (1) according to one of claims 2 to 4, **characterised in that** the light source (7) is arranged recessed in the covering surface (6).

6. A lid (9) according to any one of claims 1, or 3 to 5 or an insert (1) according to any one of claims 2 to 5, **characterised in that** the light source (7) is formed by one or more LEDs and/or OLEDs.

7. A lid (9) according to any one of claims 1 or 3 to 6 or an insert (1) according to any one of claims 2 to 6, **characterised in that** the light source is (7) is a source of white light.

8. A lid (9) according to one of claims 1 or 3 to 7 or an insert (1) according to one of claims 2 to 7, **characterised in that** the light source (7) is designed to be switchable.

9. A lid (9) according to one of claims 1 or 3 to 8 or an insert (1) according to one of claims 2 to 8, **characterised in that**, facing away from the upper side of the lid (9), the covering surface (6) is adjoined by a receiving part (5) in which a power supply for the light source (7) is arranged.

10. A lid (9) or an insert (1) according to claim 9, **characterised in that** a switch (8) for switching the light source (7) on and off is arranged on the receiving part (5).

11. A lid (9) according to any one of claims 1 or 3 to 10 or an insert (1) according to any one of claims 2 to 10, **characterised in that** the insert (1) is formed in the shape of a cup with an end opening opposite the covering surface (6).

12. A lid (9) or an insert (1) according to claim 10, **characterised in that** the insert (1) is designed as a measuring cup.

13. A mixing vessel (11) for a food processor having an upper filling opening and having a lid (9) according to any one of claims 1 or 3 to 9 for closing the filling opening.

14. A food processor for preparing food comprising a housing, a drive for an agitator disposed in the housing, an agitator vessel (11) securable to the housing and having an upper filling opening, an agitator disposable in the agitator vessel (11) and connectable to the drive, a heating device for heating a food to be prepared received in the agitator vessel (11), and a heating device for heating the food to be prepared in accordance with one of claims 1 or 3, a heating device for heating a foodstuff to be prepared which is accommodated in the stirring vessel (11), and a lid (9) formed in accordance with one of claims 1 or 3 to 9 for closing the filling opening of the stirring vessel (11).

## Revendications

1. Couvercle (9) avec une face supérieure et une face inférieure pour la fermeture d'une ouverture de réception d'un récipient de mélange (11) d'un robot de cuisine, avec une ouverture (10) qui traverse le couvercle (9) transversalement par rapport à un plan de recouvrement, et avec un insert (1) qui est inséré dans l'ouverture (10) et qui est relié de manière amovible au couvercle (9), l'insert (1) étant pourvu, dans la zone de l'ouverture (10), de premières structures de liaison qui forment une liaison amovible avec des secondes structures de liaison (3) formées sur l'insert (1), **caractérisé en ce que** la fermeture de l'ouverture (10), des premières structures de liaison sont prévues dans la zone de l'ouverture (10) et forment une liaison détachable entre l'insert (1) et le couvercle (9) avec des secondes structures de liaison ( 3) formées sur l'insert (1), l'insert (1) présentant une paroi latérale périphérique (2) avec laquelle il dépasse de la face supérieure du couvercle (9), et dans lequel l'insert (1) présente également une surface de couvercle (6) qui ferme la paroi latérale (2) du côté frontal, la paroi latérale (2) étant transparente au moins dans une zone, **caractérisé en ce que** l'insert (1) présente une source lumineuse (7) qui est conçue pour émettre de la lumière (13) en direction de l'ouverture (10) et vers la face inférieure du couvercle.

2. Insert (1) pour insertion dans une ouverture (10) d'un couvercle (9) pour un récipient de mélange (11) d'un robot de cuisine avec
• des structures de connexion (3) pour une connexion amovible au couvercle (9) du récipient d'agitation (11),
• une paroi latérale périphérique (2) qui est transparente dans au moins une région,
• une surface de couverture (6) refermant la paroi latérale (2) au niveau d'une première face d'extrémité,
• une seconde face d'extrémité opposée à la surface de couverture (6) et une source de lumière (7) agencée pour émettre de la lumière dans la direction de la seconde face d'extrémité.

3. Couvercle (9) selon la revendication 1 ou insert (1) selon la revendication 2, **caractérisé en ce que** la surface de couverture (6) est conçue pour être opaque et/ou est revêtue à l'extérieur d'un matériau opaque.

4. Couvercle (9) selon l'une des revendications 1 ou 3 ou insert (1) selon l'une des revendications 2 ou 3, **caractérisé en ce que** la source lumineuse (7) est disposée dans la zone de la surface de couverture (6).

5. Couvercle (9) selon l'une des revendications 1, 3 ou 4 ou insert (1 ) selon l'une des revendications 2 à 4, **caractérisé en ce que** la source lumineuse (7) est disposée en creux dans la surface de couverture (6).

6. Couvercle (9) selon l'une quelconque des revendications 1, ou 3 à 5 ou un insert (1) selon l'une quelconque des revendications 2 à 5, **caractérisé en ce que** la source de lumière (7) est formée par une ou plusieurs LEDs et/ou OLEDs.

7. Couvercle (9) selon l'une quelconque des revendications 1 ou 3 à 6 ou insert (1) selon l'une quelconque des revendications 2 à 6, **caractérisé en ce que** la source de lumière est (7) est une source de lumière blanche.

8. Couvercle (9) selon l'une des revendications 1 ou 3 à 7 ou insert (1) selon l'une des revendications 2 à 7, **caractérisé en ce que** la source de lumière (7) est conçue pour être commutable.

9. Couvercle (9) selon l'une des revendications 1 ou 3 à 8 ou insert (1) selon l'une des revendications 2 à 8, **caractérisé en ce que**, à l'opposé de la face supérieure du couvercle (9), se raccorde à la surface de couverture (6) une pièce de réception (5) dans laquelle est disposée une alimentation électrique pour la source lumineuse (7).

10. Couvercle (9) ou insert (1) selon la revendication 9, **caractérisé en ce qu'**un interrupteur (8) pour allumer et éteindre la source de lumière (7) est disposé sur la partie de réception (5).

11. Couvercle (9) selon l'une quelconque des revendications 1 ou 3 à 10 ou insert (1) selon l'une quelconque des revendications 2 à 10, **caractérisé en ce que** l'insert (1) est formé en forme de gobelet avec une ouverture d'extrémité opposée à la surface de couverture (6).

12. Couvercle (9) ou insert (1) selon la revendication 10, **caractérisé en ce que** l'insert (1) est conçu comme une tasse à mesurer.

13. Récipient de mélange (11) pour un robot de cuisine ayant une ouverture de remplissage supérieure et ayant un couvercle (9) selon l'une quelconque des revendications 1 ou 3 à 9 pour fermer l'ouverture de remplissage.

14. Robot ménager pour la préparation d'aliments, comprenant un boîtier, un entra nement pour un agitateur disposé dans le boîtier, un récipient d'agitation (11) pouvant être fixé au boîtier et présentant une ouverture de remplissage supérieure, un agitateur pouvant être disposé dans le récipient d'agitation (11) et pouvant être relié à l'entraînement, un dispositif de chauffage pour chauffer un aliment à préparer reçu dans le récipient d'agitation (11), et un dispositif de chauffage pour chauffer l'aliment à préparer selon l'une des revendications 1 ou 3, un dispositif de chauffage pour chauffer un aliment à préparer qui est logé dans le récipient agitateur (11), et un couvercle (9) formé selon l'une des revendications 1 ou 3 à 9 pour fermer l'ouverture de remplissage du récipient agitateur (11).
